# EUROPEAN PATENT SPECIFICATION

(11) **EP 3 626 420 B1**
(45) Date of publication and mention of the grant of the patent: **28.07.2021**
(21) Application number: 18195308.4
(22) Date of filing: 18.09.2018
(51) Int. Cl.: B28B 1/00, B28B 13/02, B28B 17/00, E04G 21/04, B33Y 30/00, B05B 1/28

(54) **CONCRETE STRUCTURE MANUFACTURING APPARATUS AND METHOD**
BETONSTRUKTURHERSTELLUNGSVORRICHTUNG UND -VERFAHREN
APPAREIL DE FABRICATION D'UNE STRUCTURE EN BÉTON ET PROCÉDÉ

(43) Date of publication of application: 25.03.2020
(73) Proprietor: Mobbot SA, 1700 Fribourg (CH)
(72) Inventor: PETIT, Agnes, 1700 Fribourg (CH); STUCKI, William, 1700 Fribourg (CH); LULLIN, Simon, 1700 Fribourg (CH); GALÉ, Benjamin, 1700 Fribourg (CH); ZULIANI, Fabio, 1700 Fribourg (CH)
(74) Representative: KATZAROV S.A.

(56) References cited:
- WO-A1-2018/115166
- DE-A1-102005 062 406
- US-A1- 2010 112 119

## Description

### Technical Field

The present invention relates to an apparatus for fabricating a 3-dimensional concrete element and a method of manufacturing the same. More particularly, it relates to an additive manufacturing method and apparatus of concrete structure for producing 3-dimensional concrete structures and combining spraying techniques, molding techniques with functional concrete surface.

### Background of the art

Additive manufacturing of concrete exists since the 80'. There are four types of additives manufacturing of concrete, the contour crafting method which is the most widely used method, the smart dynamic casting, mesh mold techniques and the conventional high speed sprayed concrete.

As its name suggests, the contour crafting method extrudes mortar filaments (fine materials < 4 mm) in successive thin layers and typically limited in height from few mm to 2-4 cm. This additive manufacturing creates hollow pieces, with more or less zigzags to increase the rigidity of the parts. The pieces thus built constitute a mold thereafter filled with concrete.

The main disadvantage of contour crafting is that only thin layers of a fine mortar are added on top of each other as explained in the document US 2005/196484 A1. The cohesion between the layers is weak and produced concrete elements does not allow to integrate reinforcement and must be filled later with concrete. The fine grain of the material does not suit to structural applications and the surface textures is uneven and this is a serious issue for the customers.

The smart dynamic casting method is an apparatus and method for vertical slip forming of concrete structures. Slip forming, is a dynamic process of fabricating concrete structure, in a single step where concrete is poured into a mold which is moved vertically in a speed according to the hardening speed of the concrete, so that the concrete is self-supporting when the cast leaves. The concrete is placed in the form and consolidated via vibration. In such processes, the concrete is poured and stacked through the sole effect of the gravity force. Since the hardening speed of the concrete is very low, this leads to a fabrication of single columns of 2 m in not less than 4-5 hours.

It is detailed in document US 2015/367588 A1. This document describes an apparatus that is dynamically moved and adapt for vertical structures. The top and bottom surfaces are open and being connected and allowing the concrete to be extruded vertically only.

The mesh mold method is described in document EP 3 042 008 A1. It is a robotically assembled reinforcement which is then filled with concrete. The method is slow, requires special design of the reinforcement, and a second manufacturing step to smoothen the surface of the concrete poured between the reinforcement parts.

Sprayed concrete is a single term that describes various components of a technology: shotcrete as material, a placing process and as a construction method. Shotcrete exists since 1914 and has been permanently adapted. The application of shotcrete are wide and include originally soil stabilization. It is used to stabilize excavation in tunneling, and underground construction, mines, concrete repair and historic buildings, protective lining, sealing works, or construction of pool. The underground construction and mine being the top applications. There are two different sprayed concrete process, the dry and wet spraying and designates the type of material which is fed to the point where excess pressure of material is fed in a nozzle and sprayed. The concrete is sprayed on natural surfaces. The resulting sprayed concrete surface is uneven.

In the last couple of years sprayed concrete has started to be used for additive manufacturing. In document US 2015/059408 A1, the concrete is sprayed in the excavation on a reinforcement placed vertically. The main drawback is that with this apparatus and this method, the lateral surfaces of the resulting manufactured concrete elements have a rough surface and a completely irregular shape from one layer to the other one and even within the same layer thereby providing a completely irregular surface. Because of this, additional steps are required for smoothening the concrete surface using a tool to cut the surface or smoothen the surface and the designed structure therefore causing a waste of time and money.

DE 10 2005 062406 A1 discloses an apparatus for manufacturing 3-dimensional concrete elements according to the preamble of claim 1.

In this regard, a primary object of the invention is to solve the above-mentioned problems and more particularly to provide a method and an apparatus providing an improved concrete structure and allowing integration of passive reinforcement

Another object of the invention it to provide a method and an apparatus capable of manufacturing different types of concrete elements in a very rapid way.

### Summary of the invention

The above problems are solved by the present invention.

Contrary to all 3-dimensional structures and additive manufacturing method using extrusion of concrete leaving cold joints between the layers, the present invention solves this issue by using sprayed concrete.

In fact, with the present invention, the so called cold joint between the layers are not present because the concrete material is projected on the bottom layer and a good adherence and reactivation between the layers is therefore achieved.

A first aspect of the invention is an apparatus for manufacturing 3-dimensional concrete elements according to claim 1. Thanks to it the invention provides a method and an apparatus providing an improved concrete structure and permits to build 3-dimensional structure with passive reinforcement and at a higher speed. Further, cantilever structures are also possible.

According to a preferred embodiment of the present invention, the concrete elements manufacturing apparatus further comprises a scarping element which is positioned at the rear of the projection head and parallel to its advancement direction. In this manner, one can adapt the height of each layer to be even. It can also comprise a second scraping element which is perpendicular to the advancement direction so as to smooth the surface between the layers.

Preferably, the guiding surfaces are made out of a water repellent and non-adhesive material taken form the group comprising polytetrafluoroethylene (PTFE), polyoxymethylene (POM), polydimethylsiloxane and silicone surface, or nylon. Thus, the surfaces provide a smooth and dense lateral surface to the concrete layer which are accumulated on the side.

Integration of fingers and shapes in the two guiding surfaces are possible allowing to integrate reservations in the concrete.

Even more preferably, PTFE is chosen as the guiding surfaces material since it shows the best results.

Advantageously, the guiding surfaces are coated with a slippery liquid-infused porous surface (SLIPS). In this manner, the sprayed concrete does not stick to the surface of the surfaces and provide an even more smooth and dense lateral surface to the concrete layer. Advantageously, the guiding surfaces are mounted on a system that allow them to rotate. According to a preferred embodiment of the present invention, the guiding surfaces are pivotably mounted to as be able to pivot along a vertical axis and/or a horizontal axis. In this manner, the projection head can create curved walls.

Preferably, the guiding surfaces are movable with respect to each other so as to be able to vary the distance and/or the position between them. Thus, the projection head can vary the thickness of the generated wall. The two guiding surfaces can also move on in a lateral movement to each other allowing to cope with complex shapes.

The guiding surfaces can be curved and soft allowing complex shapes. On the other hand, the guiding surfaces can consist in flat guiding plates, in curved guiding surfaces, in round guiding surfaces having the shape of rollers and so on.

Advantageously, the concrete elements manufacturing apparatus further comprises rollers disposed in front of the surfaces. In this manner, the projection head is more stably moved.

According to a preferred embodiment of the present invention, at least one of the guiding surface is made of a soft material such as a membrane. Thus, the guiding surfaces can be shaped accordingly when meeting an obstacle and drain excess water.

The concrete elements manufacturing apparatus further preferably comprises a quality control system which can comprise at least one specific sensor verifying the consistency of the concrete at different levels of said apparatus. In this manner, a user can continuously control the type of concrete which is used.

In addition, the apparatus can comprise sensors for controlling the height of the system in order to continuously adapt the height of the system according to the detected sprayed concrete layer height.

According to a preferred embodiment of the present invention, the apparatus further comprises a rotating tube that maintains the projection nozzle. This permits to prevent winding of the concrete feeding hose.

Advantageously, the apparatus comprises a scarping element adapted to scrap the concrete that has spilt on the side of the guiding surfaces. This permits to keep the surfaces clean.

A second aspect of the invention is a concrete elements manufacturing method using the apparatus of the first aspect of the invention comprising the steps of projecting a concrete material between the two guiding surfaces while moving the projection head through a control means, along a predefined path so as to generate a first layer with a first height and a first thickness, lifting the projection head according to a height adapted from layer to layer according to concrete rheology and operating conditions, repeating the concrete material projection step so as to generate a second layer on top of at least a portion of the first layer and repeating the preceding steps until termination. The particular advantages of this device of the invention being similar to the ones of the method of the first aspect of the invention, they will not be repeated here.

Preferably, when sprayed on a preceding concrete layer, the sprayed concrete layer reactivates through the kinetic energy the concrete on the upper side of said preceding concrete layer so as to prevent formation of cold joints. In this manner, the different layers are rigidly linked to each other.

According to a preferred embodiment of the present invention, the method further comprises integrating a passive reinforcement made out of steel rebars and/or glass fibers of carbon mesh into said manufactured wall by providing it along the projection head path and between the two guiding surfaces such that the projection head projects and surrounds the concrete material on it. In this manner, one can multiply the number of types of walls created and easily integrate reinforcement into the walls.

### Brief description of the drawings

Further particular advantages and features of the invention will become more apparent from the following non-limitative description of at least one embodiment of the invention which will refer to the accompanying drawings, wherein
- Figure 1 schematically represents a projection head according to a first embodiment of the present invention,
- Figure 2 represents a detailed projection head according to a second embodiment of the present invention,
- Figure 3A and 3B are schematically representations of the operation of the projection head of the present invention according to a first embodiment of the method,
- Figures 4A and 4B are schematically representations of the operation of the projection head of the present invention according to a second embodiment of the method,
- Figure 5 is a schematically representation of a complete spraying system comprising the projection head of the present invention, a concrete pump, and an air and accelerator supply.

### Detailed description of the invention

The present detailed description is intended to illustrate the invention in a non-limitative manner.

The present invention relates to a method and an apparatus for fabrication of 3-dimensional objects with concrete material. The concrete material is sprayed through a projection nozzle 11 between the guiding surfaces 12 and the projection head 1 is guided by a control means, preferably a robotic arm. In order to provide a great liberty to the head 1, it is preferable that the projection nozzle 11 and the guiding surfaces 12 are held and directed by a robot arm having 3, 4 or 6 axes.

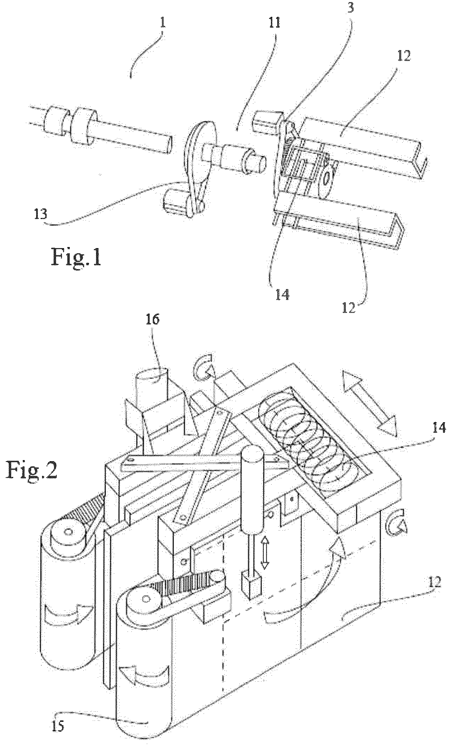

Figure 1 shows the first aspect of the invention which is a projection head 1 according to a first embodiment of the concrete elements manufacturing apparatus for spraying the concrete to generate the 3-dimensional objects.

The projection head 1 comprises a projection nozzle 11 for spraying concrete and guiding surfaces 12, which in this embodiment comprise two guiding plates 12 provided on both sides of the projection nozzle 11 and preferably in front of the projection nozzle 11 (in the moving direction) and defining a volume in between such that the projection nozzle 11 is adapted to spray the concrete into the volume. With this apparatus, one can realize 3D concrete structures in way similar to regular 3D printing because the projection head 1 is controlled by a robotic arm and is repeatedly moved along a predefined path so as to create a concrete element made of a plurality of concrete layers 20, 21.

The guiding surfaces 12 can be curved and soft allowing complex shapes. On the other hand, the guiding surfaces can consist in flat guiding plates, either rigid or soft, in curved guiding surfaces, in round guiding surfaces (in such a case a continuous circular guiding surface) or even guiding surfaces having the shape of rollers and so on. This being said, the term "guiding plate" will be used below in order to correspond to the drawings but it shall be understood that any type of guiding surface could be used.

In order to generate a concrete layer 20, 21 having an even height, the projection head 1 of the apparatus can further comprise a scarping element, preferably having the shape of an inverted comb, which is positioned at the rear of the projection head 1 and perpendicular to its advancement direction. This element, not represented in the figures, can provide a mean for scraping the surplus of concrete in order to have a controlled concrete wall height, facilitating positioning the head 1 and the robot arm for the successive layer.

Although this does not appear explicitly from the figures, the guiding plates 12 are preferably made out, or at least partially made out, of a water repellent and non-adhesive material such as PTFE, PDMS, PVC or silicone, or possibly coated with a slippery liquid-infused porous surface (SLIPS). The term partially here refers to the portion of the guiding plates 12 which is intended to be in direct contact with the concrete material.

Therefore, the guiding plates 12 are not only guiding the sprayed concrete, but provide a smooth and dense surface to the sprayed concrete.

While the guiding plates 12 can be fixed and oriented in parallel with the moving direction to provide a straight layer 20, 21, one can advantageously, mount the guiding plates 12 with a system 3, 13 that allows them to rotate. This means that one can provide the guiding plates 12 such that they are pivotably mounted on an apparatus frame or on the projection nozzle 11, through a rotating head for example, so as to be able to pivot along a vertical axis and/or a horizontal axis, to prevent the winding of the concrete hose and the realization of angles or curved walls. Figure 1 shows such a mechanism 3, 13 but it is only an example and any other suitable mechanism can be used, even a plurality of independent mechanisms for each plate.

Also, the guiding plates 12 are preferably mounted in a mobile way for opening and closing the guiding plates 12 so as to modify the gap d between them to vary the thickness of the wall/layer or their relative position to provide a shape modification to the wall/layer which is generated. This can be done with any conventional system 14 such as a worm screw for example or the like. Figures 1 and 2 also show such a mechanism 14 but it is only an example and any other suitable mechanism can be used, even a plurality of independent mechanisms for each plate.

Further, in order to adapt to possible obstacle, it is possible that at least one of the guiding plates 12 is made of a soft material such as a membrane.

Figure 2 shows an isometric and schematic view of two assembled guiding plates 12. In this figure is represented a gap modifying mechanism 14 consisting in a worm screw. Also, height modifying mechanisms 16 are represented. Also, the apparatus can comprise rollers 15 disposed in front of the guiding plates 12 which are positioned so as to roll over the lateral sides of the wall under construction. This permit to stabilize the head 1 and also to improve the smoothening of the lateral sides.

Furthermore, while this is not represented in the drawings, the apparatus can comprise a quality control system which can comprise a specific sensor, or a plurality of them, allowing to verify online the consistency of the concrete at different level of the apparatus such as in the pump or in the projection nozzle 11 or anywhere. Also, it can comprise a system for verifying the height of the layer or even of the entire piece.

According to an alternative embodiment the apparatus may comprise two projection nozzles which project concrete into the same single space. The two concrete flows of are preferably projected crosswise and this provides reinforcement of the projected concrete.

The present invention relates to an apparatus but also to a method where concrete is projected/sprayed through the projection nozzle 11 between at least the two guiding plates 12 acting as a guide and moving together with the projection nozzle 11, the whole being moved by a robot at a controlled speed. The guiding plates 12 direct the projected concrete flow and provide a smooth and compacted surface or textured surface if the guiding plates 12 contain a texture too.

More particularly, in a method of fabricating a 3-dimensional structure according to the present invention, one controls the above apparatus of the present invention so as to carry out the following steps. First, one inputs all relevant information in a control means, such as the type of object we wish to create and the associated parameters if needed. Then we start and the projection nozzle 11 is controlled to project a concrete material between the two guiding plates 12 while the projection head 1 is moved by the control means along a predefined path so as to generate a first layer 20 with a first height and a first thickness d, once done, the projection head 1 is lifted to a height adapted from layer to layer according to concrete rheology and operating conditions, and the concrete material projection step is repeated so as to generate a second layer 21 on top of at least a portion of the first layer 20 and the preceding steps are repeated until termination. The method is such that the parameters are chosen such that when sprayed on a preceding concrete layer, the sprayed concrete layer reactivates the concrete on the upper side of said preceding concrete layer by eliminating and preventing any possible cold joints between the layers so as to provide a very strong connection between the layers. This can for example consist in a dense-flow spraying process.

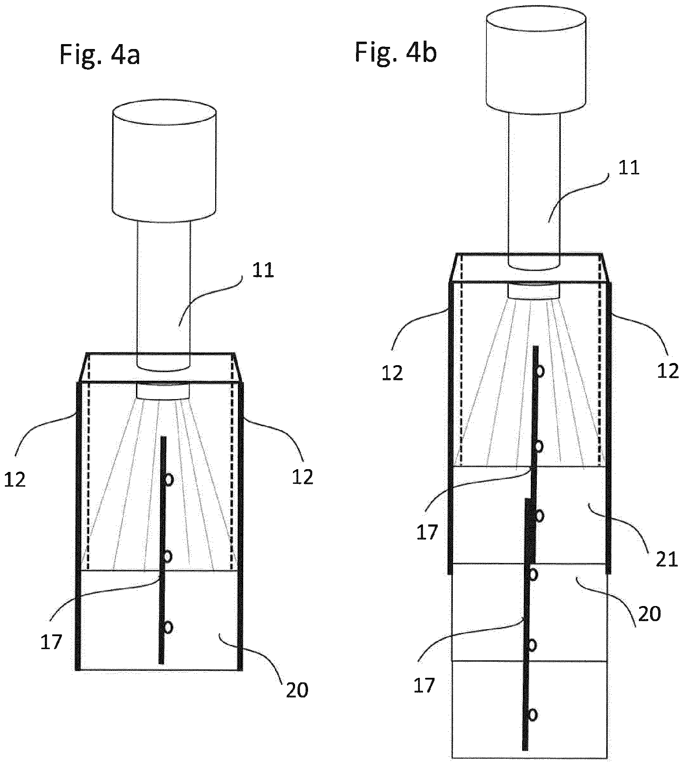

Thanks to the method of the present invention, on can integrate a passive reinforcement 17 made out of any kind of proper material such as steel rebars and/or glass fibers of carbon mesh into said manufactured wall by providing it along the projection head path and between the two guiding plates 12 and adapting the projection head height above it and the related parameters as well such that the projection head 1 simple moves over the reinforcement 17 and projects the concrete material on the passive reinforcement and surrounds it with the same. This is represented in Figure 4A showing the step when the first layer is created and figure 4B which shows the step when the second layer is created.

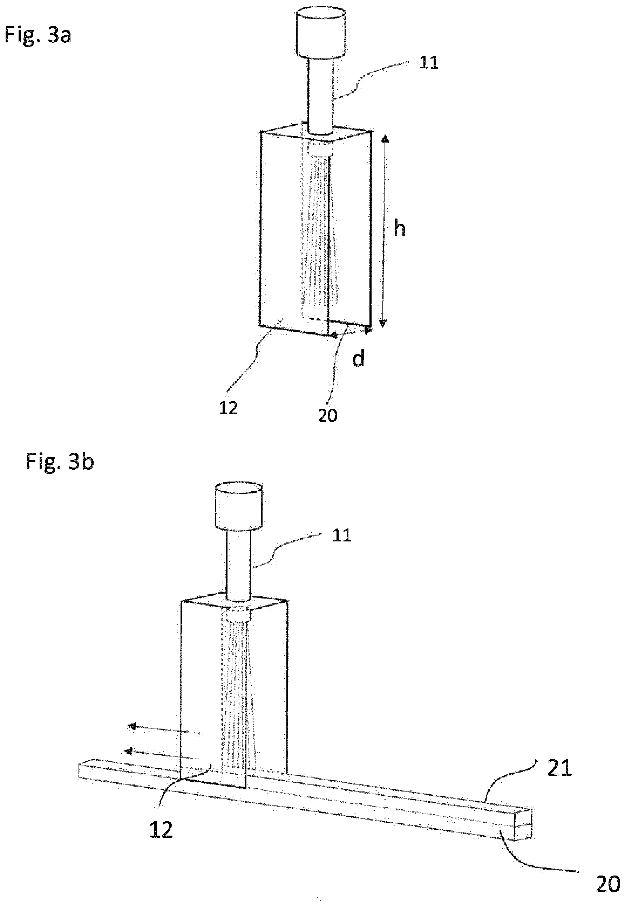

As shown in Figure 3A and 3B, the concrete is projected at a distance h typically ranging from 20 cm to 40 cm from the ground or bottom layer for a distance between the plates 12 of 8 to 12 cm, for an air debit of 4m³/min, and a projection nozzle 11 having an opening of approx. 30 mm.

These ranges are indicative only since the distance h may range from 20 cm to 1.5 m from the last projected layer or the soil, if the concrete flow, the thickness between the plates 12 (d) and any other parameters described below are suitable. The height here refers to the distance between the exit/opening of the projection nozzle 11 and the ground or lastly projected layer. From this, we can see that there is no particular preferred ranges since it depends on the need and then according to this need, all apparatus parameters are set so as to provide the best combination and the best results. For example, in order to achieve a proper projection with the above data, the air pressure can be increased to 5.5 m³/min at a pressure of 7 bars for a projection nozzle opening of 40 mm. The distance H can then also be increased and consequently the distance between the guiding plates 12 can be increased as well, for example.

The concrete flow is preferably adapted to the method, currently it oscillates between 60-100kg / min (25 -45 L / min).

The height of the layers is typically between 3 and 4 cm in height. Alternatively, according to the needs, it is very likely that one can at least double the layer heights provided that the different parameters are adjusted

The preferred width (d) of the concreted walls which corresponds to the chosen distance between the guiding plates 12, typically varies from 5 cm to 25 cm. The apparatus and the method of the present invention provide concrete walls with the entire thickness of the wall being stuffed and not just the contours.

The method permits an ultra-rapid realization of walls such as angle elements, cable chambers, electrical cabinets, urban designs and architectural elements. Arches of circles are also possible to realize provided that the guiding plates 12 are pivotable along a vertical axis, so as to follow a circle having a typical radius of curvature of 50-60cm and that the robotic arm is controlled to realize the same.

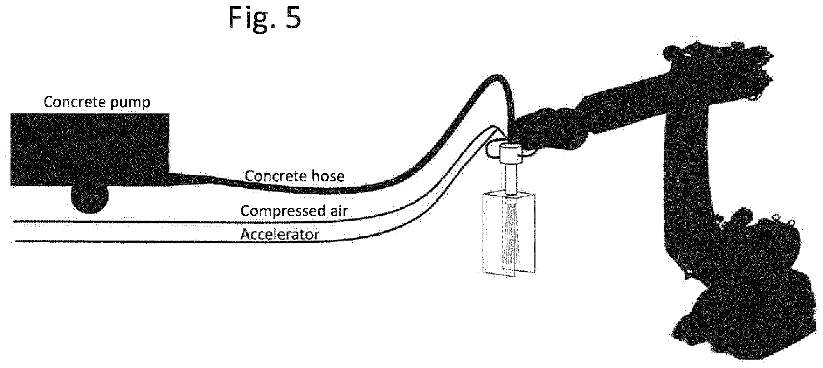

As represented in figure 5, the concrete is preferably sprayed using a dense flow method. In such method, a pump pushes an already prepared mixture comprising cement and binders, sand, aggregate and water, and not a dry mortar. Air and an activator allowing setting of the concrete is added in the projection nozzle 11 or a few cm before entering the projection nozzle 11. This is shown is figure 5. The apparatus is however not limited to it and can spray a thin flow wet sprayed concrete or a dry sprayed concrete. The method and the apparatus permit the use of concrete having a particle size up to 16 mm, preferably up to 8mm.

The apparatus of the present invention, as well as the associated method has many applications, among which, Bespoke civil engineering products such as cable chambers, wastewater treatment chambers, retaining walls, or architectural and design objects such as façades and urban design objects.

### Example

We use a concrete flow rate of 90 Kg/min, an air flow of 4 m³/min, an air pressure of 7 bar. The rheology of the concrete has been measured with a small steal cone of 5 x 10 x 15 cm and the resulting flow was of 13 cm. The height of the guiding plates 12 between the projection nozzle 11 and the bottom layer of concrete is comprised between 24 and 36 cm and the distance between the two guiding plates 12 is 8.5 cm. We varied the robot speed between 10 and 20cm/sec with an optimum at around 18 cm/sec

The resulting object showed very satisfying lateral side smoothness and layer to layer adhesiveness.

While the embodiments have been described in conjunction with a number of embodiments, it is evident that many alternatives, modifications and variations would be or are apparent to those of ordinary skill in the applicable arts without departing from the scope of the appended claims. Accordingly, this disclosure is intended to embrace all such alternatives, modifications, equivalents and variations that are within the scope of the appended claims. This is for example particularly the case regarding the different concretes or additives which can be used, or the different parameters chosen to optimize the projection of the concrete material such as the concrete flow rate, the air flow, the air pressure or the rheology of the concrete.

## Claims

1. An apparatus for manufacturing 3-dimensional concrete elements comprising a projection head (1) for spraying concrete material, wherein the projection head (1) comprises a projection nozzle (11) for spraying the concrete material and is repeatedly moved along a predefined path by a control means, **characterized in that** at least two guiding surfaces (12) are provided on both sides of the projection nozzle (11) and define a volume in between, such that the projection nozzle (11) is adapted to spray the concrete material into said volume, and **in that** the projection head (1) is configured to adjust the position of the at least two guiding surfaces (12) during the movement of the projection nozzle (11) so as to create a 3-dimensional concrete structure made of a plurality of projected concrete layers.

2. Concrete elements manufacturing apparatus to claim 1, **characterized in that** it further comprises a scarping which is positioned at the rear of the projection head (1) and perpendicular to its advancement direction.

3. Concrete elements manufacturing apparatus according to any one of claims 1 or 2, **characterized in that** the guiding surfaces (12) are made out of a water repellent and non-adhesive material taken form the group comprising polytetrafluoroethylene (PTFE), polyoxymethylene (POM), polydimethylsiloxane and POM silicone surface.

4. Concrete elements manufacturing apparatus according to any one of claims 1 to 3, **characterized in that** the guiding surfaces (12) are coated with a slippery liquid-infused porous surface.

5. Concrete elements manufacturing apparatus according to any one of claims 1 to 4, **characterized in that** the guiding surfaces (12) are pivotably mounted to as be able to pivot along a vertical axis and/or an horizontal axis.

6. Concrete elements manufacturing apparatus according to any one of claims 1 to 5, **characterized in that** the guiding surfaces (12) are movable with respect to each other so as to be able to vary the distance and/or the position between them.

7. Concrete elements manufacturing apparatus according to any one of claims 1 to 6, **characterized in that** it further comprises rollers (15) disposed in front of the guiding surfaces (12).

8. Concrete elements manufacturing apparatus according to any one of claims 1 to 7, **characterized in that** at least one of the guiding surfaces (12) is made of a soft material such as a membrane.

9. Concrete elements manufacturing apparatus according to any one of claims 1 to 8, **characterized in that** it further comprises a quality control system which comprises at least one specific sensor verifying the consistency of the concrete and/or the height of the layer at different levels of said apparatus.

10. Concrete elements manufacturing apparatus according to any one of claims 1 to 9, **characterized in that** it further comprises a rotating device that maintains the projection nozzle (11).

11. Concrete elements manufacturing apparatus according to any one of claims 1 to 10, **characterized in that** it further comprises a scarping element adapted to scrap the concrete that has spilt on the side of the guiding surfaces (12).

12. A method of manufacturing a 3-dimensional element, using the apparatus of any one of claims 1 to 11, comprising the steps of:
projecting a concrete material between the two guiding surfaces (12) while moving the projection head (1) through a control means, along a predefined path so as to generate a first layer with a first height and a first thickness,
lifting the projection head (1) according to a height adapted from layer to layer according to concrete rheology and operating conditions, and
repeating the concrete material projection step so as to generate a second layer on top of at least a portion of the first layer,
repeating the preceding steps until termination.

13. Manufacturing method according to claim 12, wherein when sprayed on a preceding concrete layer, the sprayed concrete layer reactivates the concrete on the upper side of said preceding concrete layer so as to prevent formation of cold joints.

14. Manufacturing method according to claim 12 or 13, wherein the concrete layer is projected according to a dense-flow spraying process.

15. Manufacturing method according to any one of claims 12 to 14, further comprising integrating a passive reinforcement (17) into said manufactured wall by providing it along the projection head (1) path and between the two guiding surfaces (12) such that the projection head (1) projects and surrounds the concrete material on it.

## Patentansprüche

1. Vorrichtung zur Herstellung von dreidimensionalen Betonelementen, wobei die Vorrichtung einen Sprühkopf (1) zum Sprühen von Betonmaterial umfasst, wobei der Sprühkopf (1) eine Sprühdüse (11) zum Sprühen des Betonmaterials umfasst und wiederholt durch ein Steuermittel entlang einer vorbestimmten Strecke bewegt wird, **dadurch gekennzeichnet, dass** zumindest zwei Führungsoberflächen (12) auf beiden Seiten der Sprühdüse (11) vorgesehen sind und dazwischen ein Volumen definieren, so dass die Sprühdüse (11) dazu geeignet ist, das Betonmaterial in das Volumen zu sprühen, und dass der Sprühkopf (1) dazu ausgestaltet ist, die Position der zumindest zwei Führungsoberflächen (12) während der Bewegung der Sprühdüse (11) so einzustellen, um eine dreidimensionale Betonstruktur zu schaffen, die aus einer Vielzahl von gesprühten Betonschichten hergestellt ist.

2. Vorrichtung zur Herstellung von Betonelementen nach Anspruch 1, **dadurch gekennzeichnet, dass** sie ferner eine Abstreifung umfasst, die hinter dem Sprühkopf (1) und senkrecht zu seiner Vorschubrichtung positioniert ist.

3. Vorrichtung zur Herstellung von Betonelementen nach einem der Ansprüche 1 oder 2, **dadurch gekennzeichnet, dass** die Führungsoberflächen (12) aus einem wasserabweisenden und nicht haftenden Material hergestellt sind, das aus der Gruppe umfassend Polytetrafluorethylen (PTFE), Polyoxymethylen (POM), Polydimethylsiloxan und POM-Silikon-Oberfläche ausgewählt ist.

4. Vorrichtung zur Herstellung von Betonelementen nach einem der Ansprüche 1 bis 3, **dadurch gekennzeichnet, dass** die Führungsoberflächen (12) mit einer porösen Oberfläche beschichtet sind, die mit einer schlüpfrigen Flüssigkeit getränkt ist.

5. Vorrichtung zur Herstellung von Betonelementen nach einem der Ansprüche 1 bis 4, **dadurch gekennzeichnet, dass** die Führungsoberflächen (12) schwenkbar montiert sind, so dass sie in der Lage sind, entlang einer vertikalen Achse und/oder einer horizontalen Achse zu schwenken.

6. Vorrichtung zur Herstellung von Betonelementen nach einem der Ansprüche 1 bis 5, **dadurch gekennzeichnet, dass** die Führungsoberflächen (12) in Bezug auf einander beweglich sind, um in der Lage zu sein, den Abstand und/oder die Position zwischen ihnen zu variieren.

7. Vorrichtung zur Herstellung von Betonelementen nach einem der Ansprüche 1 bis 6, **dadurch gekennzeichnet, dass** sie ferner Rollen (15) umfasst, die vor den Führungsoberflächen (12) angeordnet sind.

8. Vorrichtung zur Herstellung von Betonelementen nach einem der Ansprüche 1 bis 7, **dadurch gekennzeichnet, dass** zumindest eine der Führungsoberflächen (12) aus einem weichen Material hergestellt ist, etwa einer Membran.

9. Vorrichtung zur Herstellung von Betonelementen nach einem der Ansprüche 1 bis 8, **dadurch gekennzeichnet, dass** sie ferner ein Qualitätskontrollsystem umfasst, das zumindest einen spezifischen Sensor umfasst, der die Konsistenz des Betons und/oder die Höhe der Schicht auf unterschiedlichen Niveaus der Vorrichtung verifiziert.

10. Vorrichtung zur Herstellung von Betonelementen nach einem der Ansprüche 1 bis 9, **dadurch gekennzeichnet, dass** sie ferner eine drehende Einrichtung umfasst, welche die Sprühdüse (11) hält.

11. Vorrichtung zur Herstellung von Betonelementen nach einem der Ansprüche 1 bis 10, **dadurch gekennzeichnet, dass** sie ferner ein Abstreifelement umfasst, das dazu geeignet ist, den Beton abzustreifen, der an der Seite der Führungsoberflächen (12) austritt.

12. Verfahren zur Herstellung eines dreidimensionalen Elements unter Verwendung der Vorrichtung nach einem der Ansprüche 1 bis 11, umfassend die folgenden Schritte:
Sprühen eines Betonmaterials zwischen die zwei Führungsoberflächen (12), während der Sprühkopf (1) durch ein Steuermittel entlang einer vordefinierten Strecke bewegt wird, um eine erste Schicht mit einer ersten Höhe und einer ersten Dicke zu erzeugen,
Anheben des Sprühkopfs (1) gemäß einer Höhe, die von Schicht zu Schicht gemäß der Betonrheologie und den Betriebsbedingungen angepasst wird, und
Wiederholen des Schritts des Sprühens des Betonmaterials, um eine zweite Schicht auf zumindest einem Abschnitt der ersten Schicht zu erzeugen,
Wiederholen der vorhergehenden Schritte bis zur Fertigstellung.

13. Herstellungsverfahren nach Anspruch 12, wobei die gesprühte Betonschicht, wenn sie auf eine vorhergehende Betonschicht gesprüht wird, den Beton an der Oberseite der vorhergehenden Betonschicht reaktiviert, um die Bildung von kalten Stößen zu verhindern.

14. Herstellungsverfahren nach Anspruch 12 oder 13, wobei die Betonschicht gemäß einem Dichtstrom-Sprühverfahren gesprüht wird.

15. Herstellungsverfahren nach einem der Ansprüche 12 bis 14, ferner umfassend das Integrieren einer passiven Bewehrung (17) in die hergestellte Wand, durch deren Bereitstellen entlang des Pfads des Sprühkopfs (1) und zwischen den zwei Führungsoberflächen (12), so dass der Sprühkopf (1) das Betonmaterial sprüht und die Bewehrung damit umgibt.

## Revendications

1. Appareil de fabrication d'éléments en béton tridimensionnels comprenant une tête de projection (1) pour pulvériser un matériau de béton, dans lequel la tête de projection (1) comprend une buse de projection (11) pour pulvériser le matériau de béton et est déplacée de manière répétée le long d'un trajet prédéfini par un moyen de commande, **caractérisé en ce qu'**au moins deux surfaces de guidage (12) sont prévues des deux côtés de la buse de projection (11) et définissent un volume entre elles, de sorte que la buse de projection (11) soit adaptée pour pulvériser le matériau de béton dans ledit volume, et **en ce que** la tête de projection (1) est configurée pour régler la position des au moins deux surfaces de guidage (12) lors du déplacement de la buse de projection (11) de manière à créer une structure en béton tridimensionnelle réalisée en une pluralité de couches de béton projetées.

2. Appareil de fabrication d'éléments en béton selon la revendication 1, **caractérisé en ce qu'**il comprend en outre un élément de raclage qui est positionné à l'arrière de la tête de projection (1) et perpendiculairement à sa direction d'avancement.

3. Appareil de fabrication d'éléments en béton selon l'une quelconque des revendications 1 ou 2, **caractérisé en ce que** les surfaces de guidage (12) sont réalisées en un matériau hydrofuge et non adhésif choisi dans le groupe comprenant le polytétrafluoroéthylène (PTFE), le polyoxyméthylène (POM), le polydiméthylsiloxane et une surface de silicone POM.

4. Appareil de fabrication d'éléments en béton selon l'une quelconque des revendications 1 à 3, **caractérisé en ce que** les surfaces de guidage (12) sont revêtues d'une surface poreuse glissante imprégnée d'un liquide.

5. Appareil de fabrication d'éléments en béton selon l'une quelconque des revendications 1 à 4, **caractérisé en ce que** les surfaces de guidage (12) sont montées de manière pivotante de manière à pouvoir pivoter selon un axe vertical et/ou un axe horizontal.

6. Appareil de fabrication d'éléments en béton selon l'une quelconque des revendications 1 à 5, **caractérisé en ce que** les surfaces de guidage (12) sont mobiles l'une par rapport à l'autre de manière à pouvoir faire varier la distance et/ou la position entre elles.

7. Appareil de fabrication d'éléments en béton selon l'une quelconque des revendications 1 à 6, **caractérisé en ce qu'**il comprend en outre des rouleaux (15) disposés devant les surfaces de guidage (12).

8. Appareil de fabrication d'éléments en béton selon l'une quelconque des revendications 1 à 7, **caractérisé en ce qu'**au moins l'une des surfaces de guidage (12) est réalisée en un matériau souple tel qu'une membrane.

9. Appareil de fabrication d'éléments en béton selon l'une quelconque des revendications 1 à 8, **caractérisé en ce qu'**il comprend en outre un système de contrôle de la qualité qui comprend au moins un capteur spécifique vérifiant la consistance du béton et/ou la hauteur de la couche à différents niveaux dudit appareil.

10. Appareil de fabrication d'éléments en béton selon l'une quelconque des revendications 1 à 9, **caractérisé en ce qu'**il comprend en outre un dispositif rotatif qui maintient la buse de projection (11).

11. Appareil de fabrication d'éléments en béton selon l'une quelconque des revendications 1 à 10, **caractérisé en ce qu'**il comprend en outre un élément de raclage adapté pour racler le béton qui s'est répandu sur le côté des surfaces de guidage (12).

12. Procédé de fabrication d'un élément tridimensionnel, en utilisant l'appareil de l'une quelconque des revendications 1 à 11, comprenant les étapes consistant à :
projeter un matériau de béton entre les deux surfaces de guidage (12) tout en déplaçant la tête de projection (1) par un moyen de commande, le long d'un trajet prédéfini de manière à générer une première couche ayant une première hauteur et une première épaisseur,
soulever la tête de projection (1) selon une hauteur adaptée de couche en couche selon la rhéologie du béton et les conditions de fonctionnement, et
répéter l'étape de projection de matériau de béton de manière à générer une deuxième couche au-dessus d'au moins une partie de la première couche,
répéter les étapes précédentes jusqu'à la fin.

13. Procédé de fabrication selon la revendication 12, dans lequel lorsqu'elle est pulvérisée sur une couche de béton précédente, la couche de béton pulvérisée réactive le béton sur le côté supérieur de ladite couche de béton précédente de manière à empêcher la formation de joints froids.

14. Procédé de fabrication selon la revendication 12 ou 13, dans lequel la couche de béton est projetée selon un processus de pulvérisation à flux dense.

15. Procédé de fabrication selon l'une quelconque des revendications 12 à 14, comprenant en outre l'intégration d'une armature passive (17) dans ledit mur fabriqué en la fournissant le long du trajet de tête de projection (1) et entre les deux surfaces de guidage (12) de sorte que la tête de projection (1) projette et entoure le matériau de béton sur celle-ci.
